# EUROPEAN PATENT SPECIFICATION

(11) **EP 2 854 340 B1**
(45) Date of publication and mention of the grant of the patent: **26.10.2016**
(21) Application number: 14002802.8
(22) Date of filing: 11.08.2014
(51) Int. Cl.: H04L 12/26

(54) **Misdirected packet statistics collection and analysis**
Statistiksammlung und Analyse für fehlgeleitete Pakete
Collecte de statistiques de paquets mal dirigés et analyse

(30) Priority: 12.08.2013 US 201313965037
(43) Date of publication of application: 01.04.2015
(73) Proprietor: Ixia, Calabasas, California 91302 (US)
(72) Inventor: Gintis, Noah, Westlake Village, CA 91361 (US)
(74) Representative: Samson & Partner Patentanwälte mbB

(56) References cited:
- US-A1- 2011 069 620
- US-A1- 2011 280 137
- SADASIVAN ROHATI SYSTEMS N BROWNLEE CAIDA | THE UNIVERSITY OF AUCKLAND B CLAISE CISCO SYSTEMS G ET AL: "Architecture for IP Flow Information Export; rfc5470.txt", ARCHITECTURE FOR IP FLOW INFORMATION EXPORT; RFC5470.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 March 2009 (2009-03-01), XP015065536, [retrieved on 2009-03-31]

## Description

### BACKGROUND

### Field

This disclosure relates to generating and receiving traffic for testing a network or network device.

### Description of the Related Art

In many types of communications networks, each message to be sent is divided into portions of fixed or variable length. Each portion may be referred to as a packet, a frame, a cell, a datagram, a data unit, or other unit of information, all of which are referred to herein as packets.

Each packet contains a portion of an original message, commonly called the payload of the packet. The payload of a packet may contain data, or may contain voice or video information. The payload of a packet may also contain network management and control information. In addition, each packet contains identification and routing information, commonly called a packet header. The packets are sent individually over the network through multiple switches or nodes. The packets are reassembled into the message at a final destination using the information contained in the packet headers, before the message is delivered to a target device or end user. At the receiving end, the reassembled message is passed to the end user in a format compatible with the user's equipment.

Communications networks that transmit messages as packets are called packet switched networks. Packet switched networks commonly contain a mesh of transmission paths which intersect at hubs or nodes. At least some of the nodes may include a switching device or router that receives packets arriving at the node and retransmits the packets along appropriate outgoing paths. Packet switched networks are governed by a layered structure of industry-standard protocols.

In order to test a packet switched network or a device included in a packet switched communications network, test traffic comprising a large number of packets may be generated, transmitted into the network at one or more ports, and received at different ports. Each packet in the test traffic may be a unicast packet intended for reception at a specific destination port or a multicast packet, which may be intended for reception at two or more destination ports. In this context, the term "port" refers to a communications connection between the network and the equipment used to test the network. The term "port unit" refers to a module with the network test equipment that connects to the network at a port. The received test traffic may be analyzed to measure the performance of the network. Each port unit connected to the network may be both a source of test traffic and a destination for test traffic. Each port unit may emulate a plurality of logical source or destination addresses. The number of port units and the communications paths that connect the port units to the network are typically fixed for the duration of a test session. The internal structure of the network may change during a test session, for example due to failure of a communications path or hardware device.

A series of packets originating from a single port unit and having a specific type of packet and a specific rate will be referred to herein as a "stream." A source port unit may support multiple concurrent outgoing streams, for example to accommodate multiple packet types and/or rates. "Simultaneous" means "at exactly the same time." "Concurrent" means "within the same time."

The test traffic may be divided into a plurality of "traffic items", where each traffic item is effectively a separate test from each other traffic item. Test traffic for some or all of a plurality of traffic items may be generated and transmitted concurrently. Each traffic items may include a plurality of streams, and each stream may typically be a portion of a single traffic item.

For the purpose of collecting test data, the test traffic for each traffic item may be organized into packet groups, where a "packet group" is any plurality of packets for which network traffic statistics are accumulated. The packets in a given packet group may be distinguished by a packet group identifier (PGID) contained in each packet. The PGID may be, for example, a dedicated identifier field or combination of two or more fields within each packet.

For the purpose of reporting network traffic data, the test traffic for each traffic item may be organized into flows, where a "flow" is any plurality of packets for which network traffic statistics are reported. Each flow may consist of a single packet group or a small plurality of packet groups. Each packet group may typically belong to a single flow.

Within this description, the term "engine" means a collection of hardware, which may be augmented by firmware and/or software, which performs the described functions. An engine may typically be designed using a hardware description language (HDL) that defines the engine primarily in functional terms. The HDL design may be verified using an HDL simulation tool. The verified HDL design may then be converted into a gate netlist or other physical description of the engine in a process commonly termed "synthesis". The synthesis may be performed automatically using a synthesis tool. The gate netlist or other physical description may be further converted into programming code for implementing the engine in a programmable device such as a field programmable gate array (FPGA), a programmable logic device (PLD), or a programmable logic arrays (PLA). The gate netlist or other physical description may be converted into process instructions and masks for fabricating the engine within an application specific integrated circuit (ASIC).

Within this description, a hardware "unit" also means a collection of hardware, which may be augmented by firmware and/or software, which may be on a larger scale than an "engine". For example, a unit may contain multiple engines, some of which may perform similar functions in parallel. The terms "engine" and "unit" do not imply any physical separation or demarcation. All or portions of one or more units and/or engines may be collocated on a common card, such as a network card 114, or within a common FPGA, ASIC, or other circuit device.

US 2011/0280137 A1 relates to testing a network by generating statistics on the basis of test traffic received from a source port unit. A destination port unit has a statistics engine, coupled to a memory, which extracts packet group identifiers (PGIDs) from received packets and retrieves traffic statistics associated with the PGID from the memory. The retrieved traffic statistics include parameters such as a packets-per-interval count and a packets-per-interval threshold, the packets-per-interval count indicating a number of packets received within a time interval of a sequence of time intervals. At the start of each new time interval, the statistics engine sets a flag indicating whether or not the packets-per-interval count for the previous time interval was equal to or greater than the packets-per-interval threshold. The flag is saved in the memory as part of the traffic statistics associated with the extracted PGID.

### DESCRIPTION OF THE DRAWINGS

FIG. 1 is a block diagram of a network environment.
FIG. 2 is a block diagram of a port unit.
FIG. 3 is a graphical representation of a packet.
FIG. 4 is a block diagram of portions of a plurality of port units.
FIG. 5 is a flow chart of a process for designing a network test session.
FIG. 6 a schematic representation of a process for defining PGIDs.
FIG. 7 is a flow chart of a process for receiving traffic.
FIG. 8 is a flow chart of a process for viewing misdirected packet statistics.
FIG. 9 is a graphical representation of the process for viewing misdirected packet statistics.
FIG. 10 is a graphical representation of a graphic user interface for selecting and displaying misdirected packet statistics.

Throughout this description, elements appearing in block diagrams are assigned three-digit reference designators, where the most significant digit is the figure number where the element is introduced and the two least significant digits are specific to the element. An element that is not described in conjunction with a block diagram may be presumed to have the same characteristics and function as a previously-described element having the same reference designator.

In block diagrams, arrow-terminated lines may indicate data paths rather than signals. Each data path may be multiple bits in width. For example, each data path may consist of 4, 8, 16, 32, 64, or more parallel connections.

### DETAILED DESCRIPTION

### Description of Apparatus

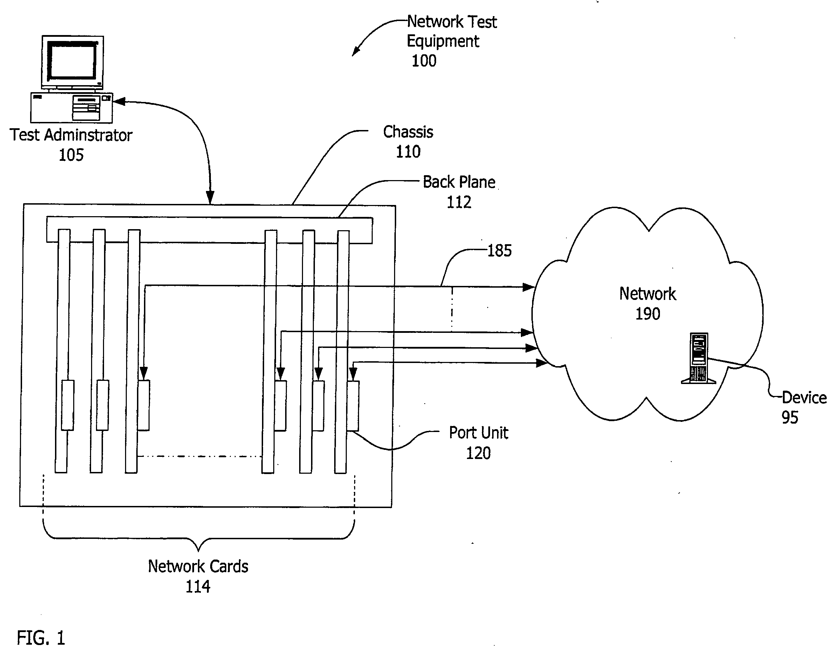

FIG. 1 shows a block diagram of a network environment. The environment may include network test equipment 100 and a network 190 which may include one or more network device 195.

The network test equipment 100 may be a network testing device, performance analyzer, conformance validation system, network analyzer, or network management system. The network test equipment 100 may include one or more network cards 114 and a backplane 112 contained or enclosed within a chassis 110. The chassis 110 may be a fixed or portable chassis, cabinet, or enclosure suitable to contain the network test equipment. The network test equipment 100 may be an integrated unit, as shown in FIG. 1. Alternatively, the network test equipment 100 may comprise a number of separate units cooperative to provide traffic generation and/or analysis. The network test equipment 100 and the network cards 114 may support one or more well known standards or protocols such as the various Ethernet and Fibre Channel standards, and may support proprietary protocols as well.

The network cards 114 may include one or more field programmable gate arrays (FPGAs), application specific integrated circuits (ASICs), programmable logic devices (PLDs), programmable logic arrays (PLAs), processors and other kinds of devices. In addition, the network cards 114 may include software and/or firmware. The term network card encompasses line cards, test cards, analysis cards, network line cards, load modules, interface cards, network interface cards, data interface cards, packet engine cards, service cards, smart cards, switch cards, relay access cards, and the like. The term network card also encompasses modules, units, and assemblies that may include multiple printed circuit boards. Each network card 114 may support a single communications protocol, may support a number of related protocols, or may support a number of unrelated protocols. The network cards 114 may be permanently installed in the network test equipment 100 or may be removable.

Each network card 114 may contain one or more port unit 120. One port unit or a plurality of port units may connect to the network 190 through respective ports. Each port may be connected to the network through a respective communication medium 185, which may be a wire, an optical fiber, a wireless link, or other communication medium. The communications media connecting the network to the plurality of port units may be the same or different. Each port unit 120 may generate and transmit test traffic to the network, and each port unit 120 may receive test traffic from the network. Packets transmitted by one of the port units120 may commonly be received by one or more other port units.

The backplane 112 may serve as a bus or communications medium for the network cards 114. The backplane 112 may also provide power to the network cards 114.

The network test equipment may communicate with a test administrator 105. The test administrator 105 may be a computing device contained within, or external to, the network test equipment 100. The network test equipment may include an operator interface (not shown) for receiving test instructions from and displaying test results to an operator.

The network 190 may be a Local Area Network (LAN), a Wide Area Network (WAN), a Storage Area Network (SAN), wired, wireless, or a combination of these, and may include or be the Internet. Communications on the network 190 may take various forms, including frames, cells, datagrams, packets or other units of information, all of which are referred to herein as packets. The network test equipment 100 and the network devices 195 may communicate simultaneously with one another, and there may be plural logical communications paths between the network test equipment 100 and a given network device 195. The network itself may be comprised of numerous nodes providing numerous physical and logical paths for data to travel.

The network device 195 may be any devices capable of communicating over the network 190. The network devices 195 may include one or more of servers, network capable storage devices including disk drives such as network attached storage (NAS) and storage area network (SAN) devices, routers, relays, hubs, switches, bridges, multiplexers and other devices.

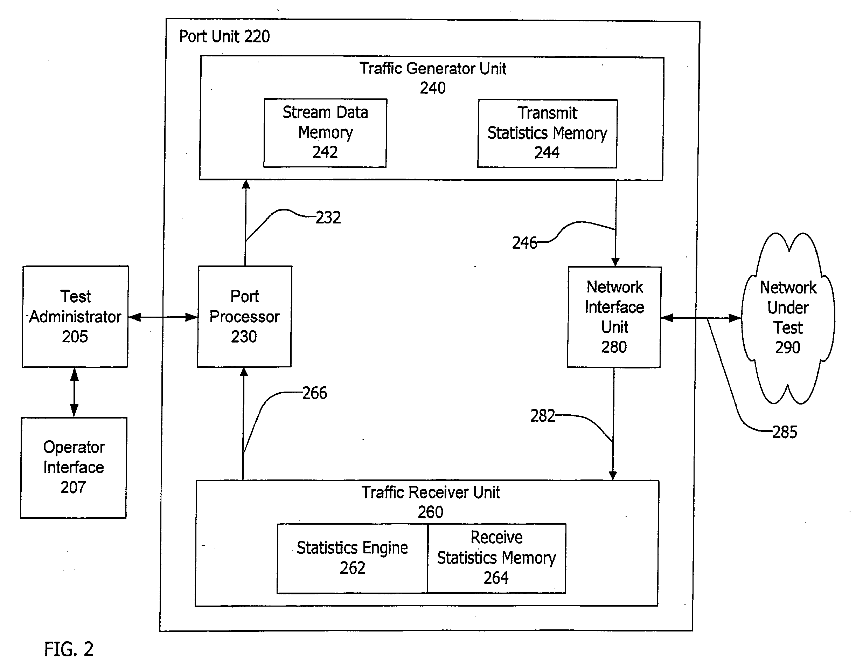

Referring now to FIG. 2, an exemplary port unit 220 may include a port processor 230, a traffic generator unit 240, a traffic receiver unit 260, and a network interface unit 280 which couples the port unit 220 to a network under test 290. The port unit 220 may be all or part of a network card such as the network cards 114.

The port processor 230 may include a processor, a memory coupled to the processor, and various specialized units, circuits, software and interfaces for providing the functionality and features described here. The processes, functionality and features may be embodied in whole or in part in software which operates on the processor and may be in the form of firmware, an application program, an applet (e.g., a Java applet), a browser plug-in, a COM object, a dynamic linked library (DLL), a script, one or more subroutines, or an operating system component or service. The hardware and software and their functions may be distributed such that some functions are performed by the processor and others by other devices.

The port processor 230 may communicate with a test administrator 205. The test administrator 205 may provide the port processor 230 with instructions and data required for the port unit 220 to participate in testing the network 290. The instructions and data received from the test administrator 205 may include, for example, definitions of packet streams to be generated by the port unit 220 and definitions of performance statistics to be accumulated and reported by the port unit 220. The test administrator 205 may be coupled to or include an operator interface 207. The operator interface 207 may be used to receive commands and requests from an operator (not shown) and to present test data to the operator. The operator may be, for example, a test engineer or system operator who needs access to the test data.

. The port processor 230 may provide the traffic generator unit 240 with stream data 232 which may be stored in a stream data memory 242 within the traffic generator unit 240. The stream data 232 may cause the traffic generator unit 240 to form a plurality of streams that may be interleaved to form outgoing test traffic 246. The plurality of streams may be portions of a single traffic item or a plurality of traffic items. Each of the streams may include a sequence of packets, which may be divided between a plurality of packet groups. The stream data 232 may include, for example, the type of packet, the frequency of transmission, definitions of fixed and variable-content fields within the packet and other information for each packet stream.

As the traffic generator unit 240 generates the outgoing test traffic 246, transmit traffic statistics may be stored in a transmit statistics memory 244. The stored transmit statistics may include, for example, a count of the number of packets generated for each stream.

The network interface unit 280 may convert the outgoing test traffic 246 from the traffic generator unit 240 into the electrical, optical, or wireless signal format required to transmit the test traffic to the network under test 290 via a link 285, which may be a wire, an optical fiber, a wireless link, or other communications link. Similarly, the network interface unit 280 may receive electrical, optical, or wireless signals from the network over the link 285 and may convert the received signals into incoming test traffic 282 in a format usable to the traffic receiver unit 260.

The traffic receiver unit 260 may receive the incoming test traffic 282 from the network interface unit 280. The traffic receiver unit 260 may include a statistic engine 262 and a receive statistics memory 264. The statistics engine 262 may identify each received packet as a member of a specific packet group and may extract test data from each packet. The received statistics memory 264 may be used to store accumulated traffic statistics for each packet group. The stored receive statistics for each packet group may include, for example, a total number of received packets, a number of packets received out-of-sequence, a number of received packets with errors, a maximum, average, and minimum latency or propagation delay, and other statistics for each packet group. After each new packet is received, the statistics engine 262 may update the test statistics stored in the receive statistics memory 264 for the associated packet group.

The traffic receiver unit 260 may also capture and store specific packets in accordance with capture criteria provided by the port processor 230. The traffic receiver unit 260 may provide test statistics and/or captured packets 266 to the port processor 230, for additional analysis during, or subsequent to, the test session.

In this patent, a port unit that generates and transmits traffic will be referred to as a source port unit. A port unit that receives traffic will be referred to as a destination port unit. A port unit connected to a network test may function as both a source port unit and a destination port unit.

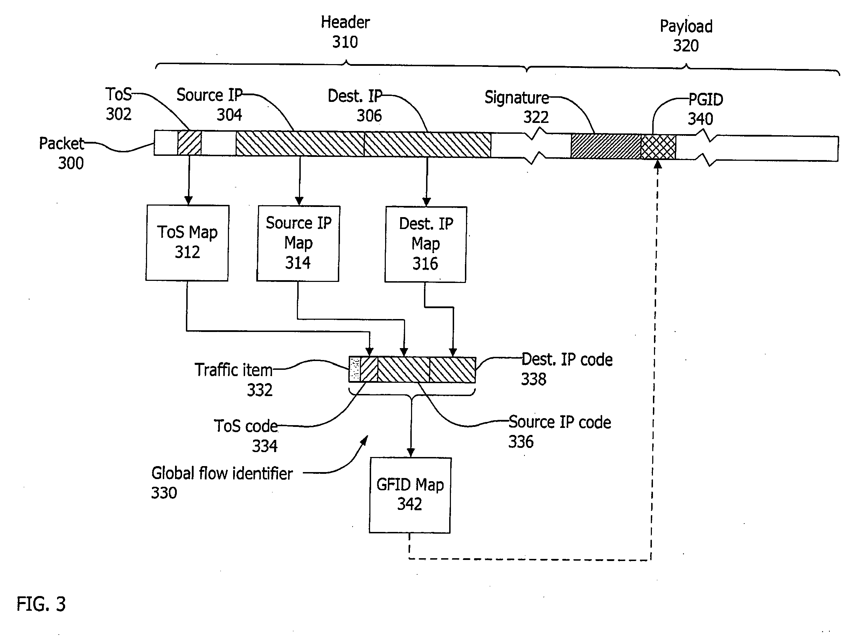

Referring now to FIG. 3, a representative packet 300 may include a header 310 and a payload 320. The packet 300 may be generated, for example by the traffic generator unit 240, during a network test session. The header 310 may include a plurality of cascaded headers corresponding to sequential communications protocol layers. For example, the header 310 may include a layer two header, such as a Media Access Control header; a layer three header, such as an Internet Protocol header; and a layer four header, such as a Transmission Control Protocol or User Datagram Protocol header. In some cases, such as packets representing traffic on a virtual local area network, one or more encapsulation headers may be disposed between the layer two header and the layer three header. When a network under test utilizes multiprotocol label switching (MPLS), one or more MPLS labels may be disposed between the layer two header and the layer three header. In addition, the header 310 of the packet 300 may be changed during transmission through a network, for example by the addition or removal of MPLS labels, tunneling protocol headers, and/or IP.v6 extension headers. Thus a substantial amount of processing may be required to parse and interpret the various fields within the header 3 10.

To allow a packet receiver unit to determine if a received packet is part of a test session, and to enable the packet receiver to extract test data from a received packet without parsing the entire header portion of the packet, the payload 320 may include a signature 322 and a PGID 340. The payload 320 may also include additional test data (not shown) such as, for example, a sequence number of the packet within a packet group defined by the PGID and/or a timestamp.

A traffic receiver may locate the signature 322 within a received packet by performing a floating comparison or pattern match against a known value of the test signature, as described in Published Application US 2007/0115833 A1. A traffic receiver may perform a floating comparison or pattern match against one or more known signature values. Packets that do not contain one of the known signature values may be discarded. Once the signature is located, the traffic receiver unit may locate and extract the PGID 340 and other test data based on the known position of these fields in relationship to the signature 322. As shown in FIG. 3, the PGID 340 and the test data may follow immediately after the signature 322.

An extensive test of a complex network may include thousands of streams comprising a million or more flows. Since it is not possible for a test operator to evaluate or understand a million flows during a test session, tracking factors, or parameters that may be used to categorize and consolidate test statistics, may be defined for each traffic item during the design of a test session. Tracking factors may include fields within each packet, such as source IP address, destination IP address, type of service, protocol, and other fields. Tracking factors may include information associated with each packet but not included within the packet, such as, for example, source port unit and destination port unit.

As previously discussed, each packet 300 to be generated may include a PGID 340 to identify the packet as a member of a packet group, and traffic statistics may be accumulated for each PGID. To allow the traffic statistics to be sorted, aggregated, and reported based on the defined tracking factors, each PGID value may correspond to a unique combination of values for the tracking factors. In some circumstances, a PGID also may contain information not associated with tracking factors.

In the example of FIG. 3, the packet 300 represents an IP.v4 (Internet Protocol version 4) packet. The header 310 0f the packet 300 includes a type of service (ToS) field 302, a source IP address field 304, and a destination IP address field 306 which are assumed to be selected as tracking factors. Additionally, the example of FIG. 3 assumes that the test session includes four traffic items, and a traffic item identifier 332 (not contained in the packet) is also a tracking factor.

In the example of FIG. 3, the ToS field 302 of an IPv4 packet is 8 bits in length and thus has 256 possible values. However, during a test session, less than all of the 256 possible values for ToS field may be used. The number of values for the ToS field that are actually used may be determined during the design of the test session. In the example of FIG. 3, an assumption is made that only 8 of the 256 possible ToS values are actually used in the test traffic for a specific test session. Thus a TOS map 312 may be developed to map the eight ToS values that are actually used to a ToS code 334 having only 3 bits. The ToS map 312 may be a look-up table or other data structure that uniquely relates each actual ToS field value with a corresponding ToS code value.

Similarly, the header 310 of the exemplary packet 300 includes a 32-bit source IP address field 304 and a 32-bit destination IP address field 306, each defining about 4.3 billion discrete IP addresses. However, during a test session only a small fraction of the source and destination IP addresses may be used. Further, since at least some of the test ports connected to the DUT may represent networks rather than discrete addresses, a least significant portion, such as a least significant byte or two least significant bytes, of some IP addresses may not be used to differentiate packet groups during a test session. Thus the number of source and destination IP address values that may be tracked during a test session may much smaller than 4.3 billion.

The source and destination IP address values to be tracked during the test session (as identified during the design of the test session) may be mapped to respective codes 336, 338 by respective maps 314, 316. For example, 500 actually-used source IP address values may be mapped to a 9-bit source IP code 336 by the source IP map 314. For further example, 250 actually-used destination IP address values may be mapped to an 8-bit destination IP code 338 by the destination IP map 316.

When the values for all of the selected tracking factors have been mapped to respective codes, the codes may be combined to form global flow identifiers (GFIDs) 330. In this context, the term "global" means used everywhere, or used by all port units. Continuing the example of FIG. 3, the ToS code 334, the source IP code 336, and the destination IP code 338 may be combined with a traffic item identifier 332 to form a GFID 330. In this example, the GFID 330 includes two bits for the traffic item identifier 332, three bits for the ToS code 334, nine bits for the source IP code 336, and eight bits for destination IP code 338, for a total of 22 bits. Each value of the GFID 330 may correspond to a unique combination of values for the selected tracking factors. More specifically, each value for the GFID 330 can be immediately associated with a specific traffic item, a specific ToS, a specific source IP address, and a specific destination IP address.

Continuing the example, a 22-bit GFID 330 has a capacity to uniquely identify over 4 million packet groups. In an ideal situation, each destination port unit used during the test session will have sufficient memory capacity to accumulate test statistics on over 4 million different packet groups. In this case, the 22-bit GFID 330 may simply be inserted into each packet generated during the test session as the PGID 340. However, in a real test environment, it may be impractical or unaffordable to provide this large memory capacity at each port unit.

Although a 22-bit GFID 330 can uniquely identify over 4 million packet groups, not all of the 4 million different packet groups are necessarily used in a given test session. For example, the previous example assumed that four traffic items and eight possible ToS values were converted into a two-bit traffic item 332 and a three-bit ToS code 334, respectively. However, if a test session used only three traffic items and only five ToS values, a two-bit traffic item 332 and a three-bit ToS code 334 would still be required in the GFID 330. In this case, only fifteen of the thirty-two possible combinations of the traffic item and ToS code are actually used. Thus the traffic item 332 and the ToS code 334 could be merged into a 4-bit combined code. In general, if less than half of the possible values of the GFID 330 are actually used, a GFID map 342 may be used to convert each used GFID values into a corresponding PGID having fewer bits. Continuing the previous example, if only 2 million of the 4 million possible GFID values are actually used in a test session, the 2 million actually-used values can be uniquely described by a 21-bit PGID. If only 1 million GFID values are actually used, they can be uniquely described by a 20-bit PGID. The GFID map 342 may be a look-up table or other data structure that uniquely relates each actually-used GIFD value with a uniquely corresponding PGID value.

Each destination port unit may accumulate separate receive statistics for each PGID value. However, the number of flows or unique PGID values for which receive statistics can be accumulated may be limited by the receive statistics memory available in each port unit. The receive statistics memory capacity may differ between port units in a test configuration. The traffic generated during a network test session may be designed such that each receiving port unit is intended to receive only a respective subset of the total number of PGID values used during the test session. Published Patent Application No. US 2012/0051234 A1 describes a network test system in which GFIDs are mapped to port-specific PGIDs such that flows destined for different receiving ports may re-use the same PGID values. Port-specific PGIDs values for each destination port allows the test system to generate and accumulate receive statics for a large number of flows, so long as the number of flows destined for each port does not exceed the port's memory capacity.

However, a port unit may receive misdirected packets, or packets not intentionally sent to the port unit, during a test session. For example, a network under test may misdirect packets due to corrupted packet headers or due to faulty routing tables or multicasting tables within the NUT. When port-specific PGIDs are used, a receiving port cannot distinguish a correctly received packet from the misdirected packet based on PGID values. Further, upon receipt of a misdirected packet, a port unit may process the misdirected packet based on its PGID and thus corrupt the receive statistics for the intended flow having the same PGID value.

Published patent application US 2011/0069620 A1 describes a test system in which a "destination signature" is embedded into each packet in addition to a PGID. The destination signature allows a receiving port unit to determine whether or not it is an intended destination for each received packet. When a port unit determines that it is not an intended destination for a received packet, the packet is counted as misdirected and discarded. However, the port unit does not accumulate any test data on misdirected packets other than a count of the total number of misdirected packets received. A count of misdirected packets may provide little guidance for determining the root cause of misdirected packets in the NUT.

An improved technique for analyzing misdirected packets is to use a common set of PGID values for all port units, such that destination port units accumulate receive statistics for both correctly-delivered packets and misdirected packets. In this context, a "correctly-delivered" packet is a packet that arrives at a destination port that is an intended destination for the packet. A "misdirected packet" is a packet that arrives at a destination port that is not an expected destination for the packet. Each destination port unit may then accumulate, not merely a count of the total number of misdirected packets, but rather a count (and other statistics) of misdirected packet by PGID number. However, in this case, a test configuration must be designed such that each destination port unit does not receive, or can detect and discard, packets having a PGID value outside of the range supported by the port unit's receive statistics memory capacity.

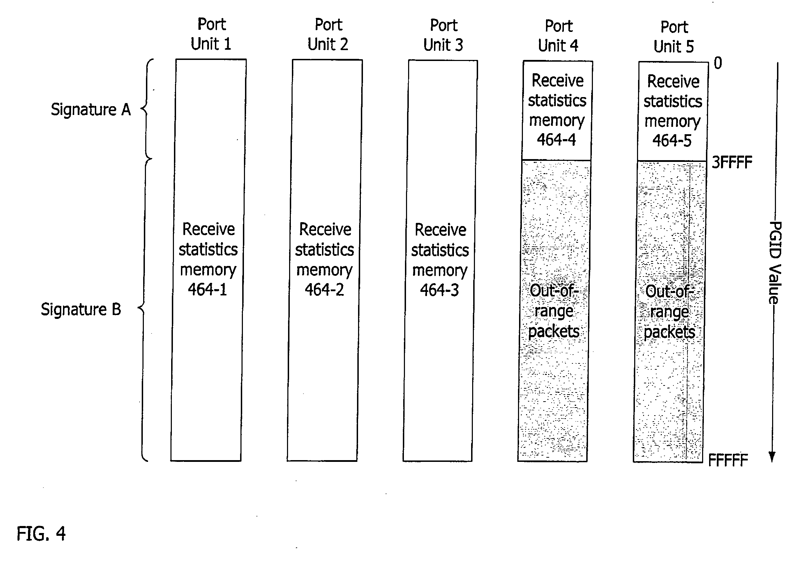

FIG. 4 is a block diagram of portions of an exemplary test system. Specifically, figure 4 is a block diagram of the receive statistics memories 464-1 to 464-5 of five port units, identified as Port Unit 1 through Port Unit 5. Statistics memories 464-1, 464-2, and 464-3 have sufficient capacity to store receive statistics for PGID values from 0 to FFFFF_{H}, which is to say receive statistics memories 464-1, 464-2, and 464-3 are compatible with a 20-bit PGID. Statistics memories 464-4 and 464-5 only have capacity to store receive statistics for PGID values from 0 to 3FFFF_{H}, which is to say statistics memories 464-4 and 464-5 are compatible with an 18-bit PGID.

A test session may be designed to use common PGID values for all receiving ports and to require each receiving port to accumulate receive statistics for all PGID values. In this case, the total number of PGID values that may be used will be dictated by the port unit with the smallest memory capacity. In the example of FIG. 4, only PGID values from 0 to 3FFFF_{H} may be used and the upper three-quarters (addresses from 40000_{H} to FFFFF_{H}) of receive statistics memories 464-1, 464-2, and 464-3 will be unused during the test session.

To make better use of a test system's hardware resources, a test session may be designed to use common PGID values for all receiving ports and to require each receiving port unit to accumulate receive statistics only for PGID values within its memory capacity. In the example test system of FIG. 4, the intended destination of packets having PGID values from 0 to 3FFFF_{H} may be any one or more of Port Unit 1 to Port Unit 5. The intended destinations of packets having PGID values from 40000_{H} to FFFFH may be only Port Unit 1, Port Unit 2, and/or Port Unit 3. All five port units may accumulate receive statistics for all PGID values from 0 to 3FFFF_{H}. Port Unit 1, Port Unit 2, or Port Unit 3 may also accumulate receive statistics for all PGID values from 40000_{H} to FFFF_{H} Port Unit 4 and Port Unit 5 may discard received packets containing PGID values from 40000_{H} to FFFF_{H}, recognizing such packets as out-of-range packets, where an "out-of-range" packet is a packet including a PGID value outside of the PGID range supported by the port unit's receive statistics memory capacity. In a properly designed test configuration, out-of-range packets are never intentionally transmitted. Thus an out-of-range received packet is known to be misdirected. Port Unit 4 and Port Unit 5 may maintain a count of received out-of-range packets containing PGID values from 40000_{H} to FFFF_{H}.

A port unit may, for example, determine whether or not a received packet is an out-of-range packet by examining the most significant bits of the PGID extracted from each packet. Continuing the example of FIG. 4, Port Unit 4 and Port Unit 5 may extract a 20-bit PGID from each packet, but only accumulate received statistics for packets where the two most significant bits of the PGID are equal to 00. Port Unit 4 and Port Unit 5 may discard received packets where the two most significant bits of the PGID are other than 00, optionally maintaining a count of such packets.

A port unit may determine whether or not a received packet is an out-of-range packet by examining a signature field extracted from each packet. For example, as shown in FIG. 4, packets including PGID values from 0 to 3FFFF_{H} may include a signature field having a value "Signature A". Packets containing Signature A may be considered as valid test packets by Port Unit 1 to Port Unit 5. Packets including PGID values from 40000_{H} to FFFF_{H} may include a signature field having a value "Signature B". Packets containing Signature B may be considered as valid test packets by Port Unit 1 to Port Unit 3. Port Unit 4 and Port Unit 5 may recognize packets containing Signature B as out-of-range packets. Packets that do not contain either Signature A or Signature B would be recognized as invalid packets and discarded by all five Port Units. Signature A and Signature B may differ by a little as a single bit.

The example of FIG. 4 included five port units having two different levels of receive statistics memory capacity. A test system may have more or fewer than five port unit and more than two difference levels of memory capacity. More than two different levels of memory capacity can be distinguished by examining an appropriate number of bits of either the PGID or the signature extracted from each received packet.

### Description of Processes

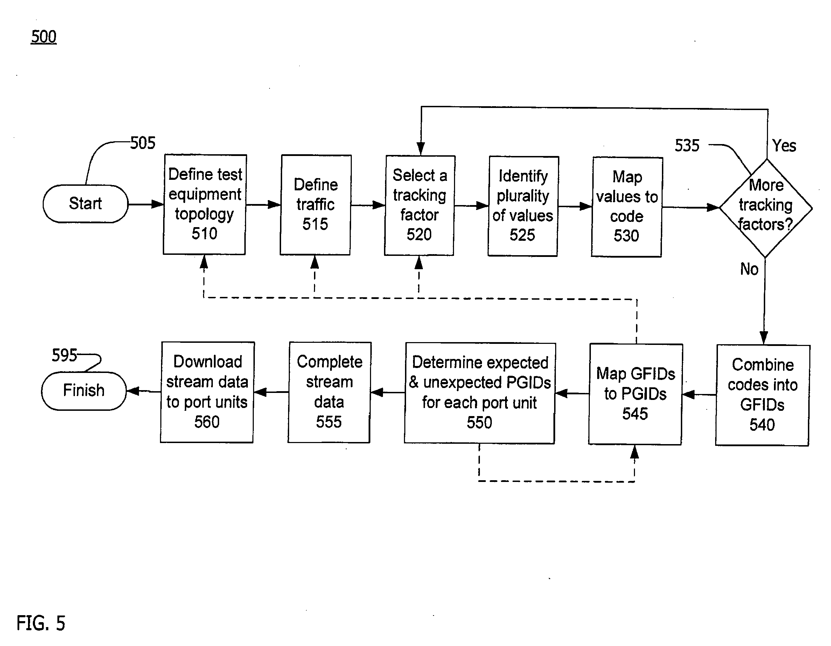

Referring now to FIG. 5, a process 500 for designing a network test session may start at 505 and may finish at 595. For the purpose of discussion, an assumption is made that the network to be tested uses internet protocol (IP) and IP addresses. However, the process 500 may be applied to designing test session for networks using other protocols and address schemes.

The process 500 may be done, for example, by a test administrator computing device, such as the test administrator 205, coupled to one or more port units, such as the port unit 220. The test administrator computing device may be supervised by one or more test engineers or other operators who may provide inputs to automated tools that perform at least part of the process 500.

The process 500 for designing a network test session may begin by defining a test equipment topology at 510. Defining the test equipment topology at 510 may include determining how many test ports will be involved in the test session and where each test port will connect to the network. Defining the test equipment topology at 510 may also include defining what each test port will emulate during the test session. Each test port may emulate as little as a single IP address and as much as an entire network encompassing a large plurality of IP addresses. Additionally, defining the test equipment topology at 510 may include defining control packets that will advertise each test port to routers, switches, and other devices within the network using one or more routing protocols such as Border Gateway Protocol, Exterior Gateway Protocol, Open Shortest Path First Protocol, Resource Reservation Protocol and other routing protocols.

At 515 the test traffic to be generated during the test session may be defined. The test traffic may include one or more traffic items. Each traffic item may effectively be a separate test of the network. Each traffic item may be defined as a plurality of streams. Each stream may be described by stream data that defines attributes of the stream such as source port; transmission frequency; fixed and variables fields of the packets in the stream such as, for example, protocol or type of packet, source and destination IP addresses, type of service, and payload content; and other characteristics of each packet in the stream.

An extensive test of a complex network may include thousands of streams comprising a million or more flows. Since it is not possible for a test operator to evaluate or understand a million flows during a test session, tracking factors, or parameters that may be used to categorize and consolidate test statistics, may be defined for each traffic item at 520-535. Tracking factors may include fields within each packet, such as source IP address, destination IP address, type of service, protocol, and other fields. Tracking factors may include information associated with each packet but not included within the packet, such as, for example, source port unit and destination port unit.

As previously discussed, each packet to be generated may include a PGID to identify the packet as a member of a packet group, and traffic statistics may be accumulated for each PGID. To allow the traffic statistics to be sorted, aggregated, and reported based on the defined tracking factors, each PGID value may correspond to a unique combination of values for the tracking factors. In some circumstances, a PGID also may contain information not associated with tracking factors.

The rationale and method for mapping tracking factors to PGIDs can be understood with reference back to the example presented in FIG. 3 and the associated discussion in the specification.

The actions from 520 through 535 may be repeated for each tracking factor. At 520, a first tracking factor may be selected. At 525, a plurality of values of the selected tracking factor that will actually be used during the test session may be identified. The plurality of values may be identified, for example, by searching the stream data defined at 515. At 530, the plurality of actual values may be mapped or compressed to a code associated with the selected tracking factor. The length of the code may be the minimum number of bits necessary to identify each of the plurality of actual values for the tracking factor.

In the example of FIG. 3 the ToS field 302 of an IPv4 packet is 8 bits in length and thus has 256 possible values. However, during a test session less than all of the 256 possible values for ToS field may be used. The number of values for the ToS field may be determined, at 530, by analyzing all of the stream data defined at 515. In the example of FIG. 3, an assumption is made that only 8 of the 256 possible ToS values are actually used in the test traffic for a specific test item. Thus the ToS values that are actually used may be mapped, at 535, to a ToS code 334 having only 3 bits. The mapping from the eight actually used 8-bit values of the ToS field 302 to the 3-bit ToS code 334 may be done using a ToS map 312. The ToS map 312 may be a look-up table or other data structure that uniquely relates each actual ToS field value with a corresponding ToS code value.

Similarly, the header of the exemplary packet 300 includes a 32-bit source IP address field 304 and a 32-bit destination IP address field 306, each defining about 4.3 billion discrete IP addresses. However, during a test session only a small fraction of the source and destination IP addresses may be used. Further, since at least some of the test ports connected to the DUT may represent networks rather than discrete addresses, a least significant portion, such as a least significant byte or two least significant bytes, of some IP addresses may not be used to differentiate packet groups during a test session. Thus the number of source and destination IP address values that may be tracked during a test session may much smaller than 4.3 billion.

The source and destination IP address values to be tracked during the test session (as identified at 530) may be mapped (at 535) to respective codes 336, 338 by respective maps 314, 316. For example, 500 source IP address values may be mapped to a 9-bit source IP code 336 by the source IP map 314. For further example, 250 destination IP address values may be mapped to an 8-bit destination IP code 338 by the destination IP map 316.

When the values for all of the selected tracking factors have been mapped to respective codes (at 520-535), the codes may be combined at 540 to form global flow identifiers (IDs). In this context, the term "global" means used everywhere, or used by all port units. Continuing the example of FIG. 3, the ToS code 334, the source IP code 336, and the destination IP code 338 may be combined with a traffic item identifier 332 to form a global flow ID 330. In this example, the global flow ID 330 includes two bits for the traffic item identifier 332, three bits for the ToS code 334, nine bits for the source IP code 336, and eight bits for destination IP code 338, for a total of 22 bits. Each value of the global flow ID 330 may correspond to a unique combination of values for the selected tracking factors. More specifically, each value for the global flow ID 330 can be associated with a specific traffic item, a specific ToS, a specific source IP address, and a specific destination IP address.

Continuing the example of FIG. 3, a 22-bit global flow ID has a capacity to uniquely identify over 4 million packet groups. However, in a typical test session, not all of the possible GFID values are actually used. Thus the GFID values from 540 may be mapped to shorter (i.e. fewer bits) PGID values at 545. In general, if less than half of the possible values of the GFIDs from 540 are actually used, a GFID map 324 or other technique may be used at 545 to convert each actually-used GFID values into a corresponding PGID having fewer bits. The GFID map 342 may be a look-up table or other data structure that uniquely relates each actually-used GIFD value with a uniquely corresponding PGID value. If more than half of the possible GFID values are actually used, compression of the GFIDs is not possible and the GFID values from 540 may be used as PGIDs.

In an ideal situation, each destination port unit used during the exemplary test session will have the memory capacity to accumulate receive statistics for all of the possible PGID values. However, in a real test environment, it may be impractical or unaffordable to provide this large memory capacity at each port unit. In this case, as discussed in conjunction with FIG. 4,the traffic to be generated during a test session may be defined such that each destination port unit only receives packets with PGID values that map to the available receive statistics memory.

At 550, the traffic defined at 515 and the PGID values from 545 may be analyzed to determine the expected PGID values for each destination port unit, which is to say to determine the PGID values of packets for which each port unit is an intended destination. The expected PGID values for each destination port unit may be evaluated to ensure that all expected PGID values map to locations within the available receive statistics memory. If one or more expected PGID values do not map to locations with the available receive statistics memory, the process 500 may return to 545 to modify the PGID may appropriately. In some circumstances, it may not be possible to generate, at 545, a PGID map such that each destination port only receives packet with acceptable PGID values. In such a situation, the process 500 may return to 510, 515, or 520 to change the test equipment topology, to redefine the traffic, or to select different tracking factors. The process 500 may repeat iteratively as needed to arrive at an acceptable PGID map.

When an acceptable PGID map has been defined at 545, a final determination of expected and unexpected PGIDs may be made at 550. A packet with an unexpected PGID value can only arrive at a destination port if the packet has been misdirected during transit through the network under test.

The stream data defined, at least in part, at 515 may be completed at 555 by adding appropriate PGID data to each stream definition. At 560, the stream data may be downloaded to the source ports defined at 510, and an inverse of the PGID map generated at 545 may be downloaded to destination ports. After the stream data and maps are downloaded, the process 500 for designing a test session may end at 595.

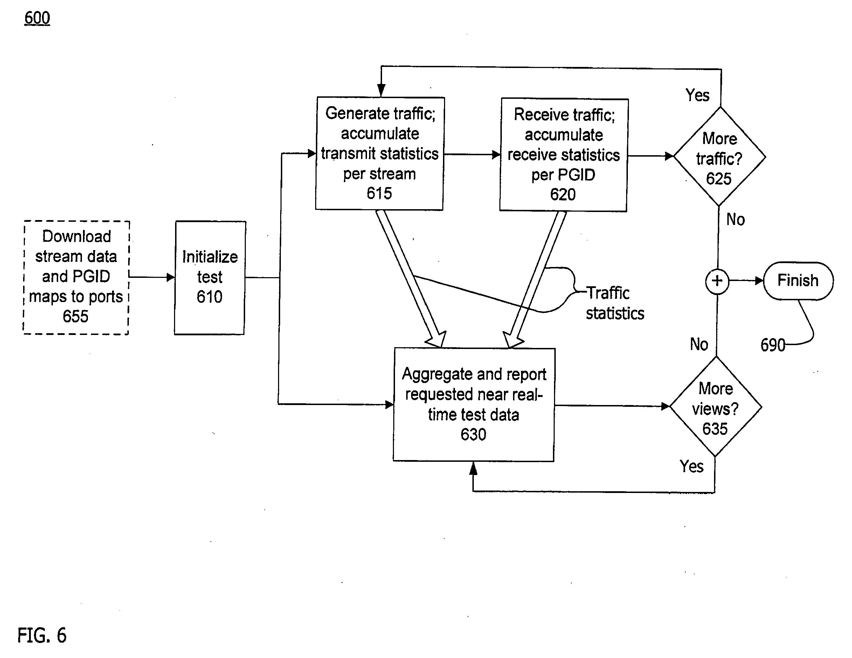

Referring now to FIG. 6, a process 600 for testing a network may be performed by a test administrator, such as the test administrator 205, coupled to a plurality of port units such as the port unit 220. Each port unit may include a traffic generator, a traffic receiver, and a port processor. Each traffic receiver may accumulate receive statistics in a receive memory. The process 600 may be cyclic in nature and may repeat continuously for the duration of a test session.

The process 600 may begin after the port units have received stream data and PGID maps, for example from a test session design process such as 560 in the test session design process 500. At 610, the test session may be initialized to logically connect the IP addresses represented by the port units to the network under test. Initializing the test session may include the port units advertising their presence to the network under test using one or more routing protocols such as Border Gateway Protocol, Exterior Gateway Protocol, Open Shortest Path First Protocol, Resource Reservation Protocol and other routing protocols. Initializing the test session may also include the port units negotiating communications parameters, for example MPLS labels, with the network under test.

After the port units are logically connected to the network under test at 610, test traffic may be generated by one or more source ports units at 615 and received by one or more destination port units at 620. The test traffic may include one or more traffic items. Each traffic item may include a plurality of streams and each stream may include a large plurality of flows. Test traffic may be generated simultaneously by a plurality of source port units at 615. The test traffic generated by each source port unit may include a plurality of interleaved streams and flows. At 615, each port unit may also accumulate transmit statistics, including at least a number of packets transmitted for each stream. Test traffic may be received simultaneously by a plurality of destination port units at 620. Each destination port unit may accumulate receive statistics for packet groups identified by a PGID or an augmented PGID extracted from each received packet. The source port units and the destination port units may continuously generate and receive test traffic until a determination is made at 625 that all required test traffic has been transmitted.

At 630, an operator may request and view near real-time test data. In this patent, the term "near real-time" means current except for a processing delay that is small with respect to the overall duration of a test session. Near real-time test data may be, for example, delayed by a period of a few seconds to a few minutes. Near real-time test data may be reported or viewed at 630 concurrently with and/or after traffic statistics are accumulated at 615 and 620. The actions at 630 cannot be performed until at least some traffic statistics have been accumulated at 615 and 620. The actions at 630 may not be performed until an operator has entered a request to view specific test data. The test data requested and viewed at 630 may include transmit statistics accumulated at 615 and/or receive statistics collected at 620.

Requesting and viewing test data at 630 may be cyclic in nature. The actions at 630 may be repeated each time an operator enters a new request to view test data. The actions at 630 may be periodic and may be repeated at regular time intervals. The actions at 630 may be repeated periodically until a determination is made, at 635, that no additional test data views are required. The process 600 may finish at 690 when no additional traffic or test data views are required.

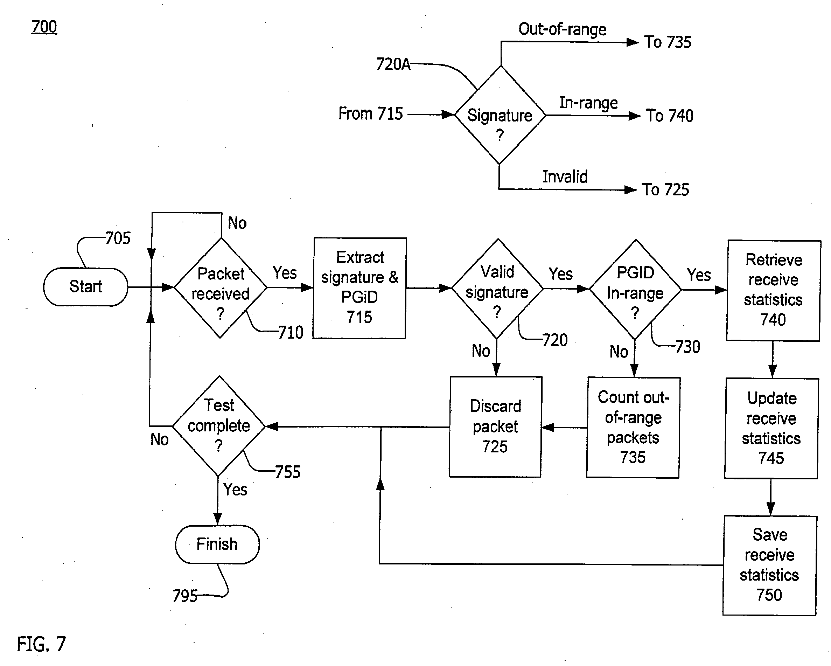

FIG. 7 is a flow chart of a process 700 for accumulating receive statistics. The process 700 may be suitable for use at 620 in the process 600. The process 700 may be performed by a traffic receiver unit in a destination port unit, such as the traffic receiver unit 260 in the port unit 220 of FIG. 2. Multiple instantiations of the process 700 may be performed in parallel at multiple port units in a test configuration. The process 700 is cyclic in nature, and the actions from 710 to 755 may be repeated cyclically for each received packet. The process 700 may start at 705 when a test session is initiated and may finish at 795 when the test session has been completed.

Although shown as a plurality of sequential actions for ease of description, the process 700 may be performed by hardware such that all of the actions of the process are performed essentially simultaneously. For example, all of the actions of the process 700 may be completed within a single hardware clock cycle.

The process 700 may idle at 710 until a determination is made that a packet has been received. At 715, a signature and a PGID may be extracted from the received packet. For example, the signature location may be determined by comparing a sliding window comparison between the packets as it is received and one or more predetermined valid signature values. When a valid signature value is located within the received packet, a PGID values may be located and extracted based on the location of the signature. When a valid signature cannot be located within the received packet (no at 720), the packet may be discarded at 725. A determination may then be made at 755 whether or not the test has been completed. If the test in not complete, the process 700 may return to 710 to await the next received packet.

When a determination is made at 720 that the received packet contains a valid signature, a determination may be made at 730 whether or not the PGID value extracted from the received packet is within the received statistics memory range of the traffic receiver unit. As discuss in conjunction with FIG. 4, different port units may have different receive statistics memory capacity. While a test session may be designed such that each destination port unit is intended to receive only packets having PGID values within the capacity or range of the destination port unit's receive statistics memory, port units may unintentionally receive out-of-range packets that have been misdirected by the network under test. In this context, an "out-of-range" PGID is a PGID having a value greater than the largest PGID for which the port unit can store receive statistics.

When a determination is made at 730 that the PGID value extracted at 715 is out-of-range ("no" at 730), an out-of-range misdirected packet count may be incremented at 735. The out-of-range misdirected packet may then be discarded at 725. A determination may then be made at 755 whether or not the test has been completed. If the test in not complete, the process 700 may return to 710 to await the next received packet.

When a determination is made at 730 that the PGID value extracted at 715 is in-range ("yes" at 730), receive statistics corresponding to the PGID value may be updated at 740-760. Updating the receive statistics may include retrieving previously-stored receive statistics from the receive statistics memory at 740, updating the receive statistics at 745, and saving the updated received statistics back in the same memory location at 750. The actions from 740 to 760 may be performed, for example, in a single read-modify-write memory cycle.

Updating the receive statistics at 745 may include, for example, incrementing a count of the number of packets received and adding the length of the received packet to a cumulative value for the number of bytes received. Updating the receive statistics at 745 may also include, for example, determining a latency time for the received packet, substituting the determined latency time for a previously-stored value for maximum latency time or minimum latency time if appropriate.

After the updated receive statistics have been saved at 750, a determination may then be made at 755 whether or not the test has been completed. If the test in not complete, the process 700 may return to 710 to await the next received packet.

A variation on the process 700 may use the signature extracted from each received packet, rather than the PGID, to determine if the received packet is in-range or out-of-range. In this case, after the signature and PGID are extracted at 715, a determination may be made at 720A (in place of elements 720 and 730) whether the received packet is in-range, out-of-range, or invalid. For example, a test configuration may include port units having different receive statistics memory capacities. Multiple signature values (or portions of signature values) may be defined corresponding to the different receive statistics memory capacities present in the test configuration. For example, a first signature value may indicate a packet having a PGID with that is in-range for all port units. A second signature value may indicate a packet having a PGID that is in-range for all port units except port units having the smallest receive statistics memory capacity. Additional signature values may be assigned as needed. A final signature value may indicate a packet having a PGID that is in-range for only the port units having the greatest receive statistics memory capacity. Each port unit may then judge, at 720A, if the received packet is in-range or out-of-range based on the signature value. Packets that do not contain any of the defined signature values may be determined to be invalid.

Packets determined to be invalid at 720A may be discarded at 725 and the process may continue as previously described. Packets determined to be out-of-range at 720A may counted at 735 and the process may continue as previously described. When a received packet is determined to be in-range at 720A, the process may continue at 740 as previously described.

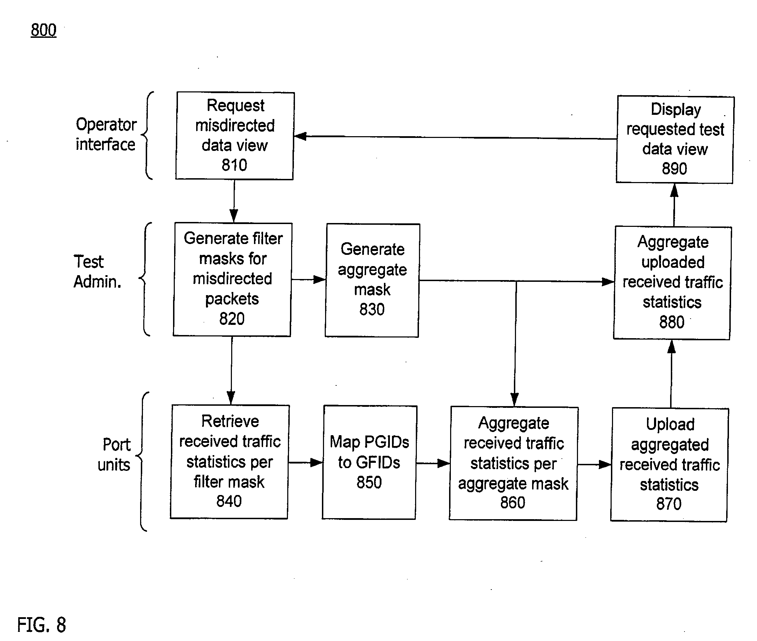

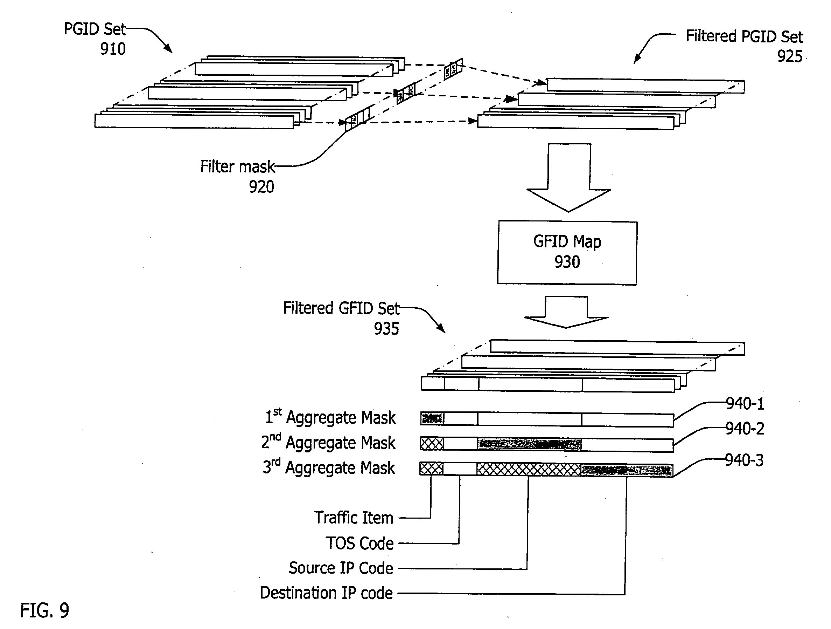

FIG. 8 is a flow chart of a process 800 for viewing misdirected traffic statistics that may be suitable for use as a portion of action 630 in FIG. 6. The process 800 will be explained in conjunction with an example shown in FIG. 9. In the following description, reference designators from 800 to 890 refer to FIG. 8 and reference designators from 910 to 940 refer to FIG. 9.

The process 830 may be performed by an operator interface coupled to a test administrator computing device which is, in turn, coupled to a plurality of port units.

At 810, an operator may enter one or more requests to view misdirected traffic statistics via an operator interface coupled to the test administrator computing device. For example, the operator may enter the one or more requests using a graphical user interface presented on a display device of the operator interface. Each request may identify one more tracking factors to be used to aggregate and organize the misdirected traffic statistics.

In response to the requests entered at 810, the test administrator may configure the port units to provide the requested misdirected traffic statistics. At 820, the test administrator may generate a unique filter mask for each destination port indicating the receive statistics requested from that port. The filter mask for each port may identify PGID values that are not expected at that port, which is to say PGID values for packets that only reach the port after being misdirected by the NUT. The filter mask for each port may identify all or a portion of the PGID values that are not expected at that port.

For example, each filter mask may be a bit string having a single bit corresponding to each possible PGID value. Each bit of the filter mask may indicate if the receive statistics accumulated for corresponding PGID are, or are not, required to satisfy the requests entered at 810. At 820, the filter masks may be transmitted to the respective destination port units. The filter masks may include a substantial number of bits (a filter mask for a port unit that accumulates receive statistics for 100,000 PGIDs may require 100,000 bits). Long filter masks may be compressed, for example by run-length encoding, for transmission by the test administrator and subsequently decompressed at the respective destination port units. When two or more test data views are requested at 810, the filter masks generated and transmitted to the destination port units may indicate the receive statistics required for all of the requested test data views in combination.

At 830, the test administrator may generate one or more aggregate masks indicating how the requested receive statistics should be aggregated or summarized. The one or more aggregate masks may be common to all destination port units. The aggregate masks may define which GFID fields are to be used to aggregate and present the receive statistics requested at 810. The aggregate masks may be transmitted to the destination port units at 830.

In this patent, the term "aggregate" has the broad meaning of "to collect or combine into a whole". The exact mathematical operations involved in aggregating traffic statistics may depend on the nature of the statistics. For example, a number of received packets may be accumulated for each PGID. To aggregate the number of received packets for a plurality of PGIDs, the number of packets received for each of the plurality of PGIDs may simply be summed to provide the aggregate number of packets received. For further example, a maximum latency time may be accumulated for each PGID. To aggregate the maximum latency time for a plurality of PGIDs, the maximum latency for each PGID may be mutually compared and the single largest value may be selected as the aggregate maximum latency.

At 840, a port processor within each port unit may retrieve receive statistics from the receive statistics memory of the port unit in accordance with the respective filter mask. As shown in FIG. 9, each port unit may accumulate receive statistics for a PGIDs set 910. A filter mask 920 may contain a single bit for each PGID indicating if the receive statistics associated with the corresponding PGID are, or are not, required to provide the misdirected traffic statistics requested at 810. The PGID set 910 may be filtered by the filter mask 920 to provide a filtered PGID set 925. At 840, the port processor may retrieve the receive statistics associated with each PGID of the filtered PGID set 925.

The PGID values in received packets may be assigned in a manner that does not provide for immediate correlation of a PGID with values for tracking factors. At 850, each PGID of the filtered PGID set 925 may be mapped to a filtered GFID set 935. Each PGID of the filtered PGID set 925 may be mapped to a corresponding GFID using a PGID map 930, which may be the logical inverse of the GFID map 342 shown in FIG. 3. Each GFID may include fields or codes corresponding to a plurality of tracking factors. Continuing the example of FIG. 3, each GFID of the filtered GFID set 935 may include, for example, separate fields or codes corresponding to traffic item, ToS/TC, source IP address, and destination IP address.

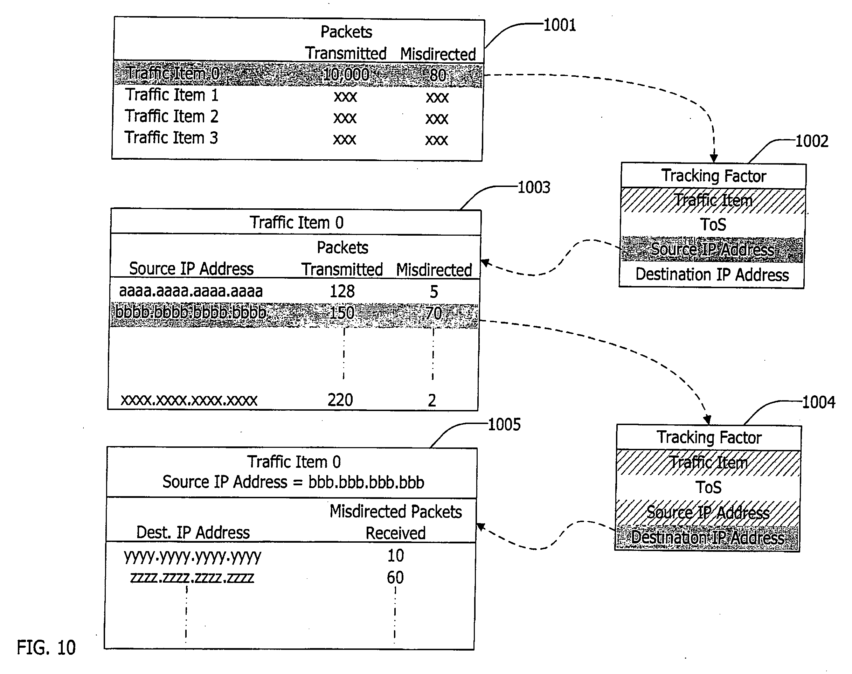

At 860, each port unit may aggregate the receive statistics associated with the filtered global flow IDs in accordance with the aggregate mask generated by the test administrator at 830. The aggregate mask may identify one or more fields of the filtered global flow IDs to be used for sorting and reporting traffic statistics. For example, the 1^{st} aggregate mask 940-1 shown in FIG. 9 identifies (dark shading) the traffic item field. This mask may cause each port units to sort the receive statistics associated with the filtered global flow IDs in accordance with the value of the traffic item field and then aggregate the receive statistics for all global flow IDs having the same traffic item value. The 2^{nd} and 3^{rd} aggregate masks 940-2 and 940-3 will be discussed subsequently in conjunction with the discussion of FIG. 10.

At 870, the aggregated receive statistics may be uploaded from each port unit to the test administrator. Continuing the previous example, one set of receive statistics corresponding to each value of the traffic item field may be uploaded from each port unit to the test administrator. At 880, the test administrator may further aggregate the receive statistics received from the port units.

At 890, the test administrator may present the aggregated receive statistics from 880 via the operator interface. The aggregated receive statistics may be presented to an operator via a test data view on a display device within the operator interface. The aggregated receive statistics may also be printed, transmitted via a network, stored, and/or reported in some other manner.

The entire process 800 may be cyclic in nature. The actions from 810 through 890 may be repeated each time a new test data view is requested.

FIG. 10 shows exemplary test data views 1001, 1003, 1005 which may be displayed to an operator or otherwise reported. The exemplary test data views 1001, 1003, 1005 combine aggregated receive statistics from the process 800 of FIG. 8 and aggregated transmit statistics. The exemplary test data views are based on the example first started in FIG. 3. For ease of presentation, only one transmit statistic, number of packets transmitted, and one receive statistic, number of misdirected packets, are shown test data views 1001 and 1003. In a real-world test numerous additional receive statistics may be accumulated and presented. Receive statistics may include quantitative data such as number of packet received, number of packets received out of sequence, and number of packets lost; temporal data such as minimum, maximum, and/or average latency; and other information.

The first test data view 1001 shows both transmit statistics and receive statistics aggregated according to traffic item. The first test data view 1001 may be consistent with the 1^{st} aggregate mask 940-1 of FIG. 9. In keeping with the example of FIG. 3, traffic item has only four values. The four traffic items and the corresponding aggregated traffic statistics may be displayed, for example, in tabular form as shown at 1001 in FIG. 10.

The first test data view may be considered a first-level summary of data for a test session. A first-level summary view may present summary test data for all packet groups aggregated in accordance with a selected first tracking factor (in this example - traffic item). Another tracking factor such as, for example, source port number or destination port number may be selected as the first tracking factor and a similar first-level summary test data view may be generated.

An operator, upon reviewing a first-level test data view, may select one specific value for the first tracking factor and then request a second-level test data view aggregated according to a second tracking. In the example of FIG. 10, an operator may review the first-level test data view 1001 and select Traffic Item 0 (shown with shading). A list 1002 of possible second tracking factors may then be presented, and the operator may select a second tracking factor. In the example of FIG. 10, the operator is assumed to select Source IP Address (shown shaded in the table 1002) as the second tracking factor.

In response to the operator selection of Source IP Address, a second-level test data view 1003 may be generated. The exemplary second-level test data view 1003 may show only test data for Traffic Item 0, and may show the test data for Traffic Item 0 sorted and aggregated by source IP address. The second-level test data view 1003 may be generated using a filter mask 920 that rejects all test data not associated with Traffic Item 0 and an aggregate mask, such as the aggregate mask 940-2 that instructs port unit to aggregate traffic statistics based on the source IP address field of the filtered global flow IDs 935.

An operator, upon reviewing a second-level test data view, may select one specific value for the second tracking factor and then request a third-level test data view aggregated according to a third tracking factor. In the example of FIG. 10, an operator may review the second-level test data view 1003 and select source IP address bbb.bbb.bbb.bbb (shown with shading). A list 1004 of possible third tracking factors may then be presented, and the operator may select a third tracking factor. In the example of FIG. 10, the operator is assumed to select destination IP address (shown shaded in the table 1004) as the third tracking factor.

In response to the operator selection of ToS, a third-level test data view 1005 may be generated. The exemplary third-level test data view 1005 may show only test data for Traffic Item 0 and source IP address bbb.bbb.bbb.bbb sorted and aggregated by destination IP address. The third-level test data view 1005 may be generated using a filter mask 920 that rejects all test data not associated with Traffic Item 0 and source IP address bbb.bbb.bbb.bbb and an aggregate mask, such as the aggregate mask 940-3, that instructs port unit to aggregate traffic statistics based on the destination IP addresses of the filtered global flow IDs 935. One or more additional levels of sorting and aggregation may be available, depending on the number of tracking factors used for a given traffic item.

The first-level, second-level, and third level test data views 1001, 1003, 1005 shown in FIG. 10 all list numbers of misdirected packets for various combinations of tracking factors. Other data views are also possible. For example, further analysis may be performed on the transmit statistics and the receive statistics to generate a test data view showing what destination ports or IP addresses actually receive misdirected packets from a particular source port or source IP address. Similarly, a test data view may be generated to show which source ports or IP addresses transmit the misdirected packets received at a particular destination port or IP address.

### Closing Comments

Throughout this description, the embodiments and examples shown should be considered as exemplars, rather than limitations on the apparatus and procedures disclosed or claimed. Although many of the examples presented herein involve specific combinations of method acts or system elements, it should be understood that those acts and those elements may be combined in other ways to accomplish the same objectives. With regard to flowcharts, additional and fewer steps may be taken, and the steps as shown may be combined or further refined to achieve the methods described herein. Acts, elements and features discussed only in connection with one embodiment are not intended to be excluded from a similar role in other embodiments.

As used herein, "plurality" means two or more. As used herein, a "set" of items may include one or more of such items. As used herein, whether in the written description or the claims, the terms "comprising", "including", "carrying", "having", "containing", "involving", and the like are to be understood to be open-ended, i.e., to mean including but not limited to. Only the transitional phrases "consisting of" and "consisting essentially of", respectively, are closed or semi-closed transitional phrases with respect to claims. Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements. As used herein, "and/or" means that the listed items are alternatives, but the alternatives also include any combination of the listed items.

## Claims

1. A method of testing a network (190), comprising:
one or more source port units (120, 220) transmitting packets, each packet including a packet group identifier, briefly referred to as PGID, the PGID included in each packet identifying one or more of a plurality of destination port units (120, 220) as expected destinations of the packet;
the plurality of destination port units (120, 220) receiving the packets from the network (190), each destination port unit extracting the PGID from each received packet, accumulating receive statistics for at least a respective range of PGID values, and storing accumulate receive statistics in a receive statistics memory (264, 464); and
**characterized in that**
a common set of PGID values for all destination port units (120, 220) is used;
accumulating receive statistics comprises counting misdirected packets by PGID value;
the method further comprising reporting misdirected packet statistics by
retrieving, from the receive statistics memory (264, 464) of at least one destination port unit, receive statistics for at least some PGIDs for which the destination port unit is not an expected destination, and
aggregating the retrieved receive statistics to generate the misdirected packet statistics.

2. The method of claim 1, wherein retrieving receive statistics further comprises:
retrieving, at the at least one destination port unit, receive statistics in accordance with a respective filter mask that identifies at least some PGIDs for which each destination port unit is not an expected destination.

3. The method of claim 1 or claim 2, wherein the receive statistics memory (264, 464) has a capacity to store receive statistics for the range of PGID values, the method further comprising:
each destination port unit determining (730) whether or not the PGID extracted from each received packet is within the PGID value range of the receive statistics memory (264, 464)
incrementing (735) a misdirected packet count in the misdirected packet statistics if the PGID is outside the PGID value range.

4. The method of claim 3, wherein determining whether or not the PGID extracted from each received packet is within the PGID value range of the receive statistics memory (264, 464) comprises
examining a number of most significant bits of the PGID extracted from each packet, the number of most significant bits not being supported by the capacity of the receive statistics memory (264, 464).

5. The method of claim 3 or claim 4, further comprising
each destination port unit discarding (725) received packets with the PGID being outside the receive statistics memory range.

6. The method of any of claims 1 to 5, further comprising:
identifying a plurality of tracking factors, each tracking factor having a plurality of possible values
generating a plurality of PGIDs including a unique PGID corresponding to every possible combination of values for the plurality of tracking factors by
generating, for each tracking factor, a map to associate a respective plurality of possible values with a corresponding code, wherein the length of the code corresponding to each tracking factor is the minimum length sufficient to uniquely identify each of the respective plurality of possible values;
concatenating the codes corresponding to each possible combination of values for the plurality of tracking factors to form a plurality of global flow identifiers; and
uniquely compressing each of the plurality of global flow identifiers to a corresponding one of the plurality of PGIDs.

7. An apparatus for testing a network (190, 290), comprising:
a plurality of destination port units (120, 220), each destination port unit (120, 220) comprising:
a network interface unit (280) to receive packets from the network (190, 290),
a statistics engine (262) configured to extract a packet group identifier, briefly referred to as PGID, from each received packet and to accumulate receive statistics associated with each PGID, and
a receive statistics memory (264, 464) to store the accumulated receive statistics for a range of PGIDs;
one or more source port units (120, 220) to transmit a plurality of packets over the network (190, 290), each packet including a PGID that identifies one or more of the plurality of destination port units (120, 220) as expected destinations of the packet; and
a test administrator (105, 205) coupled to the plurality of destination port units (120, 220),
**characterized in that**
a common set of PGID values for all destination port units (120, 220) is used;
the statistics engine (262) is configured to count misdirected packets by PGID value;
the test administrator (105, 205) is configured to:
retrieve, from the receive statistics memory of at least one destination port (120, 220) unit, receive statistics for at least some PGIDs for which the respective destination port unit is not an expected destination,
aggregate the retrieved receive statistics to generate the misdirected packet statistics, and
report the misdirected packet statistics.

8. The apparatus of claim 7, wherein the test administrator (105, 205) is configured to:
generate, for each of the at least one destination port unit, a respective filter mask that identifies at least some PGIDs for which the destination port unit is not an expected destination.

9. The apparatus of claim 7 or claim 8, wherein the receive statistics memory (264, 464) has a capacity to store receive statistics for the range of PGID values, each of the plurality of destination port units (120, 220) being arranged to:
determine whether or not the PGID extracted from each received packet is within the PGID value range of the receive statistics memory (264, 464)
increment a misdirected packet count in the misdirected packet statistics if the PGID is outside the PGID value range.

10. The apparatus of claim 9, each of the plurality of destination ports (120, 220) being arranged to
examine a number of most significant bits of the PGID extracted from each packet, the number of most significant bits not being supported by the capacity of the receive statistics memory (264, 464).

11. The apparatus of claim 9 or claim 10, each of the plurality of destination ports (120, 220) being arranged to
discard received packets with the PGID being outside the receive statistics memory range.

12. The apparatus of any of claims 7 to 11, being further arranged to
identify a plurality of tracking factors, each tracking factor having a plurality of possible values
generate a plurality of PGIDs including a unique PGID corresponding to every possible combination of values for the plurality of tracking factors by
generating, for each tracking factor, a map to associate a respective plurality of possible values with a corresponding code, wherein the length of the code corresponding to each tracking factor is the minimum length sufficient to uniquely identify each of the respective plurality of possible values;
concatenating the codes corresponding to each possible combination of values for the plurality of tracking factors to form a plurality of global flow identifiers; and
uniquely compressing each of the plurality of global flow identifiers to a corresponding one of the plurality of PGIDs.

13. A computer program configured to, when executed by at least one processor, cause the processor to
receive packets from a network (190), each packet including a packet group identifier, briefly referred to as PGID, the PGID included in each packet identifying one or more of a plurality of destination port units (120, 220) as expected destinations of the packet
extract the PGID from each received packet, accumulate receive statistics for at least a range of PGID values, and store accumulate receive statistics in a receive statistics memory (264, 464) of at least one destination port unit (120, 220); and
**characterized in that**
a common set of PGID values for all destination port units (120, 220) is used;
the computer program is further configured to cause the processor to
accumulate receive statistics comprises counting misdirected packets by PGID value;
report misdirected packet statistics by
retrieve, from the receive statistics memory (264, 464) of at the least one destination port unit (120, 220), receive statistics for at least some PGIDs for which the destination port unit (120, 220) is not an expected destination, and
aggregate the retrieved receive statistics to generate the misdirected packet statistics.

14. The computer program of claim 13 further being configured to, when executed by the at least one processor, cause the processor to perform any of the methods of claims 2 to 6.

## Patentansprüche

1. Verfahren zum Testen eines Netzwerks (190), umfassend:
eine oder mehrere Quellport-Einheiten (120, 220) übertragen Pakete, wobei jedes Paket eine Paketgruppen-Kennung, kurzgenannt PGID, enthält, wobei die in jedem Paket enthaltene PGID wenigstens eine von mehreren Zielport-Einheiten (120, 220) als erwartete Ziele des Pakets identifiziert;
die mehreren Zielport-Einheiten (120, 220) empfangen die Pakete von dem Netzwerk (190), wobei jede Zielport-Einheit aus jedem empfangenen Paket die PGID extrahiert, Empfangs-Statistiken für mindestens einen jeweiligen Bereich von PGID-Werten ansammelt, und angesammelte Empfangs-Statistiken in einem Empfangs-Statistik-Speicher (264, 464) speichert; und
**dadurch gekennzeichnet dass**,
ein gemeinsamer Satz von PGID-Werten für alle Zielport-Einheiten (120, 220) genutzt wird;
das Ansammeln von Empfangs-Statistiken ein Zählen von fehlgeleiteten Paketen durch den PGID-Wert umfasst;
das Verfahren weiterhin das Anzeigen von fehlgeleiteten Paket-Statistiken umfasst, durch
Abrufen, aus dem Empfangs-Statistik-Speicher (264, 464) mindestens einer Zielport-Einheit, von Empfangs-Statistiken von mindestens einigen PGIDs, für welche die Zielport-Einheit kein erwartetes Ziel ist, und
Aggregieren der abgerufenen Empfangs-Statistiken, um die Statistik fehlgeleiteter Pakete zu generieren.

2. Verfahren gemäß Anspruch 1, wobei das Abrufen von Empfangs-Statistiken weiterhin umfasst:
Abrufen von Empfangs-Statistiken an der mindestens einen Zielport-Einheit gemäß einer entsprechenden Filter-Maske, die mindestens einige PGIDs identifiziert, für die jede Zielport-Einheit kein erwartetes Ziel ist.

3. Verfahren gemäß Anspruch 1 oder Anspruch 2, wobei der Empfangs-Statistik-Speicher (264, 464) eine Speicherkapazität hat, die Empfangs-Statistiken für den Bereich der PGID-Werte zu speichern, das Verfahren weiterhin umfassend:
jede Zielport-Einheit bestimmt (730), ob oder ob nicht die aus jedem empfangenen Paket extrahierte PGID innerhalb des Bereichs der PGID-Werte des Empfangs-Statistik-Speichers (264, 464) ist,
Inkrementieren (735) eines Zählers für fehlgeleitete Pakete in der Statistik fehlgeleiteter Pakete, wenn die PGID außerhalb des Bereichs der PGID-Werte ist.

4. Verfahren gemäß Anspruch 3, wobei das Bestimmen, ob oder ob nicht die aus jedem empfangenen Paket extrahierte PGID innerhalb des Bereichs der PGID-Werte des Empfangs-Statistik-Speichers (264, 464) ist, umfasst
Untersuchen einer Anzahl von höchstwertigsten Bits der aus jedem Paket extrahierten PGID, wobei die Anzahl von höchstwertigsten Bits nicht durch die Speicherkapazität des Empfangs-Statistik-Speichers (264, 464) unterstützt wird.

5. Verfahren gemäß Anspruch 3 oder 4, weiterhin umfassend:
jede Zielport-Einheit verwirft (725) empfangene Pakete mit einer PGID, die außerhalb des Bereichs des Empfangs-Statistik-Speichers ist.

6. Verfahren gemäß einem der Ansprüche 1 bis 5, weiterhin umfassend:
Identifizieren von mehreren Tracking-Faktoren, wobei jeder Tracking-Faktor mehrere mögliche Werte hat,
Generieren mehrerer PGIDs einschließlich einer eindeutigen PGID, die jeder möglichen Kombination von Werten der mehreren Tracking-Faktoren entspricht, durch
Generieren einer Abbildung für jeden Tracking-Faktor, um jeweils mehrere von möglichen Werten mit einem entsprechenden Code zu verknüpfen, wobei die Länge des Codes die minimale Länge ist, die ausreicht, um jeden der jeweiligen mehreren von möglichen Werten eindeutig zu identifizieren;
Konkatenieren der Codes, die jeder möglichen Kombination von Werten für die mehreren Tracking-Faktoren entsprechen, um mehrere globale Strom-Kennungen zu bilden;
eindeutiges Komprimieren von jeder der mehreren Strom-Kennungen zu einer entsprechenden der mehreren PGIDs.

7. Vorrichtung zum Testen eines Netzwerks (190, 290) umfassend:
mehre Zielport-Einheiten (120, 220), wobei jede Zielport-Einheit (120, 220) umfasst:
eine Netzwerk-Schnittstellen-Einheit (280), um Pakete von dem Netzwerk (190, 290) zu empfangen,
eine Statistik-Engine (262), die dazu eingerichtet ist, eine Paketgruppen-Kennung, kurzgenannt PGID, aus jedem empfangenen Paket zu extrahieren und Empfangs-Statistiken anzusammeln, die mit jeder PGID verknüpft sind, und
einen Empfangs-Statistik-Speicher (264, 464) zum Speichern der angesammelten Empfangs-Statistiken für einen Bereich von PGIDs;
eine oder mehrere Quellport-Einheiten (120, 220) zum Übertragen von mehreren Paketen über das Netzwerk (190, 290), wobei jedes Paket eine PGID enthält, die wenigstens eine von mehreren Zielport-Einheiten (120, 220) als erwartete Ziele des Pakets identifiziert; und
ein Test-Administrator (105, 205), der mit den mehreren Zielport-Einheiten (120, 220) gekoppelt ist,
**dadurch gekennzeichnet, dass**
ein gemeinsamer Satz von PGID-Werten für alle Zielport-Einheiten (120, 220) genutzt wird;
die Statistik-Engine (262) dazu eingerichtet ist, fehlgeleitete Paketen nach PGID-Wert zu zählen;
der Test-Administrator (105, 205) dazu eingerichtet ist:
von dem Empfangs-Statistik-Speicher (264, 464) mindestens einer Zielport-Einheit Empfangs-Statistiken für mindestens einige PGIDs abzurufen, für welche die jeweilige Zielport-Einheit kein erwartetes Ziel ist, und
die abgerufene Empfangs-Statistiken zu aggregieren, um die Statistik fehlgeleiteter Pakete zu generieren, und
die Statistik fehlgeleiteter Pakete zu berichten.

8. Vorrichtung gemäß Anspruch 7, wobei der Test-Administrator (105, 205) dazu eingerichtet ist:
eine entsprechende Filter-Maske für mindestens eine Zielport-Einheit zu generieren, die mindestens einige PGIDs identifiziert, für die die Zielport-Einheit kein erwartetes Ziel ist.

9. Vorrichtung gemäß Anspruch 7 oder Anspruch 8, wobei der Empfangs-Statistik-Speicher (264, 464) eine Speicherkapazität hat, die Empfangs-Statistiken für den Bereich der PGID-Werte zu speichern, wobei jede der mehreren Zielport-Einheiten (120, 220) dazu eingerichtet ist:
zu bestimmen, ob oder ob nicht die aus jedem empfangenen Paket extrahierte PGID innerhalb des Bereichs der PGID-Werte des Empfangs-Statistik-Speichers (264, 464) ist,
einen Zähler für fehlgeleitete Pakete in der Statistik fehlgeleiteter Pakete zu inkrementieren, wenn die PGID außerhalb des Bereichs der PGID-Werte ist.

10. Vorrichtung gemäß Anspruch 9, wobei jede der mehreren Zielport-Einheiten (120, 220) dazu eingerichtet ist:
eine Anzahl von höchstwertigsten Bits der aus jedem Paket extrahierten PGID zu untersuchen, wobei die Anzahl von höchstwertigsten Bits nicht durch die Speicherkapazität des Empfangs-Statistik-Speichers (264, 464) unterstützt wird.

11. Vorrichtung gemäß Anspruch 9 oder 10, wobei jede der mehreren Zielport-Einheiten (120, 220) dazu eingerichtet ist:
empfangene Pakete mit einer PGID, die außerhalb des Bereichs des Empfangs-Statistik-Speichers sind, zu verwerfen.

12. Vorrichtung gemäß einem der Ansprüche 7 bis 11, die weiterhin dazu eingerichtet ist:
mehrere Tracking-Faktoren zu identifizieren, wobei jeder Tracking-Faktor
mehrere mögliche Werte hat
mehrere PGIDs zu generieren, einschließlich eine eindeutigen PGID, die jeder möglichen Kombination von Werten der mehreren Tracking-Faktoren entspricht, durch
Generieren einer Abbildung für jeden Tracking-Faktor, um jeweilig mehrere von möglichen Werten mit einem entsprechenden Code zu verknüpfen, wobei die Länge des Codes die minimale Länge ist, die ausreicht, um jeden der jeweiligen mehreren von möglichen Werten eindeutig zu identifizieren;
Konkatenieren der Codes, die jeder möglichen Kombination von Werten für die mehreren Tracking-Faktoren entsprechen, um mehrere globale Strom-Kennungen zu bilden;
eindeutiges Komprimieren jeder der mehreren Strom-Kennungen zu einer jeweiligen der mehreren PGIDs.

13. Computerprogramm, das bei Ausführung durch mindestens einen Prozessor, dazu eingerichtet ist, den Prozessor dazu zu veranlassen
Pakete von einem Netzwerk (190) zu empfangen, wobei jedes Paket eine Paketgruppen-Kennung, kurzgenannt PGID, enthält, wobei die in jedem Paket enthaltene PGID wenigstens eine von mehreren Zielport-Einheiten (120, 220) als die erwarteten Ziele des Paketes identifiziert
die PGID aus jedem empfangenen Paket zu extrahieren, Empfangs-Statistiken für mindestens einen Bereich von PGID-Werten anzusammeln und angesammelte Empfangs-Statistiken in einem Empfangs-Statistik-Speicher (264, 464) mindestens einer Zielport-Einheit (120, 220) zu speichern; und
**dadurch gekennzeichnet, dass**
ein gemeinsamer Satz von PGID-Werten für alle Zielport-Einheiten (120, 220)
genutzt wird;
das Computerprogramm weiterhin dazu eingerichtet ist, den Prozessor dazu zu veranlassen
Empfangs-Statistiken anzusammeln, das das Zählen von fehlgeleiteten Paketen nach PGID-Wert umfasst;
eine Statistik fehlgeleiteter Pakete zu berichten durch
Abrufen, aus dem Empfangs-Statistik-Speicher (264, 464) mindestens einer Zielport-Einheit (120, 220), von Empfangs-Statistiken von mindestens einigen PGIDs, für welche die Zielport-Einheit (120, 220) kein erwartetes Ziel ist, und
Aggregieren der abgerufenen Empfangs-Statistiken, um die Statistik fehlgeleiteter Pakete zu generieren.

14. Computerprogramm gemäß Anspruch 13, das weiterhin dazu eingerichtet ist, bei Ausführung durch den mindestens einen Prozessor den Prozessor dazu zu veranlassen, eines der Verfahren der Ansprüche 2 bis 6 durchzuführen.

## Revendications

1. Procédé pour tester un réseau (190), comprenant :
la transmission de paquets par une ou plusieurs unités de ports d'origine (120, 220), chaque paquet comprenant un identifiant de groupe de paquets, appelé sous forme abrégée PGID, le PGID compris dans chaque paquet identifiant une ou plusieurs d'une pluralité d'unités de ports de destination (120, 220) comme étant les destinations prévues du paquet ;
la réception des paquets en provenance du réseau (190) par la pluralité d'unités de ports de destination (120, 220), chaque unité de port de destination extrayant le PGID de chaque paquet reçu, cumulant des statistiques de réception pour au moins une plage respective de valeurs de PGID, et stockant les statistiques de réception cumulées dans une mémoire des statistiques de réception (264, 464) ; et
**caractérisé en ce que**
un ensemble commun de valeurs de PGID pour toutes les unités de ports de destination (120, 220) est utilisé ;
le cumul des statistiques de réception comprend le comptage des paquets mal dirigés par valeur de PGID ;
le procédé comprenant en outre un rapport des statistiques de paquets mal dirigés par
récupération, à partir de la mémoire des statistiques de réception (264, 464) d'au moins une unité de port de destination, des statistiques de réception pour au moins certains PGID pour lesquels l'unité de port de destination n'est pas une destination prévue, et
agrégation des statistiques de réception récupérées pour générer les statistiques de paquets mal dirigés.

2. Procédé selon la revendication 1, dans lequel la récupération de statistiques de réception comprend en outre :
la récupération, dans l'au moins une unité de port de destination, de statistiques de réception suivant un masque de filtrage respectif qui identifie au moins certains PGID pour lesquels chaque unité de port de destination n'est pas une destination prévue.

3. Procédé selon la revendication 1 ou la revendication 2, dans lequel la mémoire des statistiques de réception (264, 464) a une capacité pour stocker des statistiques de réception pour la plage de valeurs de PGID, le procédé comprenant en outre :
la détermination (730), par chaque unité de port de destination, de la présence ou non du PGID extrait de chaque paquet reçu dans la plage de valeurs de PGID de la mémoire des statistiques de réception (264, 464),
l'incrémentation (735) d'un compte des paquets mal dirigés dans les statistiques des paquets mal dirigés si le PGID se trouve en dehors de la plage de valeurs de PGID.

4. Procédé selon la revendication 3, dans lequel la détermination de la présence ou non du PGID extrait de chaque paquet reçu dans la plage de valeurs de PGID de la mémoire des statistiques de réception (264, 464) comprend
l'examen du nombre de bits de poids les plus forts du PGID extrait de chaque paquet, le nombre de bits de poids les plus forts n'étant pas compatible avec la capacité de la mémoire des statistiques de réception (264, 464).

5. Procédé selon la revendication 3 ou la revendication 4, comprenant en outre
l'élimination (725), par chaque unité de port de destination, des paquets reçus dont le PGID se trouve en dehors de la plage de la mémoire des statistiques de réception.

6. Procédé selon l'une quelconque des revendications 1 à 5, comprenant en outre :
l'identification d'une pluralité de facteurs de suivi, chaque facteur de suivi ayant une pluralité de valeurs possibles,
la génération d'une pluralité de PGID comprenant un PGID unique correspondant à chaque combinaison possible de valeurs pour la pluralité de facteurs de suivi, par
génération, pour chaque facteur de suivi, d'une carte permettant d'associer une pluralité respective de valeurs possibles à un code correspondant, la longueur du code correspondant à chaque facteur de suivi étant la plus petite longueur suffisante pour identifier de manière unique chacune de la pluralité respective de valeurs possibles ;
concaténation des codes correspondant à chaque combinaison possible de valeurs de la pluralité de facteurs de suivi pour former une pluralité d'identifiants de flux global ; et
compression, de manière unique, de chacun de la pluralité d'identifiants de flux global en un PGID correspondant de la pluralité de PGID.

7. Appareil pour tester un réseau (190, 290), comprenant :
une pluralité d'unités de ports de destination (120, 220), chaque unité de port de destination (120, 220) comprenant :
une unité d'interface réseau (280) pour recevoir des paquets en provenance du réseau (190, 290),
un moteur de statistiques (262) configuré pour extraire un identifiant de groupe de paquets, appelé sous forme abrégée PGID, de chaque paquet reçu et pour cumuler des statistiques de réception associées à chaque PGID, et
une mémoire des statistiques de réception (264, 464) pour stocker les statistiques de réception cumulées pour une plage de PGID ;
une ou plusieurs unités de ports d'origine (120, 220) pour transmettre une pluralité de paquets par le réseau (190, 290), chaque paquet comprenant un PGID qui identifie une ou plusieurs de la pluralité d'unités de ports de destination (120, 220) comme étant des destinations prévues du paquet ; et
un administrateur de test (105, 205) couplé à la pluralité d'unités de ports de destination (120, 220),
**caractérisé en ce que**
un ensemble commun de valeurs de PGID pour toutes les unités de ports de destination (120, 220) est utilisé ;
le moteur de statistiques (262) est conçu pour compter les paquets mal dirigés par valeur de PGID ;
l'administrateur de test (105, 205) est configuré pour :
récupérer, de la mémoire des statistiques de réception d'au moins une unité de port de destination (120, 220), les statistiques de réception pour au moins certains PGID pour lesquels l'unité de port de destination respective n'est pas une destination prévue,
agréger les statistiques de réception récupérées pour générer les statistiques de paquets mal dirigés, et
rapporter les statistiques de paquets mal dirigés.

8. Appareil selon la revendication 7, dans lequel l'administrateur de test (105, 205) est configuré pour :
générer, pour chacune de l'au moins une unité de port de destination, un masque de filtrage respectif qui identifie au moins certains PGID pour lesquels l'unité de port de destination n'est pas une destination prévue.

9. Appareil selon la revendication 7 ou la revendication 8, dans lequel la mémoire des statistiques de réception (264, 464) a une capacité pour stocker des statistiques de réception pour la plage de valeurs de PGID, chacune de la pluralité d'unités de ports de destination (120, 220) étant agencée pour:
déterminer si le PGID extrait de chaque paquet reçu se trouve ou non dans la plage de valeurs de PGID de la mémoire des statistiques de réception (264, 464),
incrémenter un compte des paquets mal dirigés dans les statistiques des paquets mal dirigés si le PGID se trouve en dehors de la plage de valeurs de PGID.

10. Appareil selon la revendication 9, chacun de la pluralité de ports de destination (120, 220) étant agencé pour :
examiner le nombre de bits de poids les plus forts du PGID extrait de chaque paquet, le nombre de bits de poids les plus forts n'étant pas compatible avec la capacité de la mémoire des statistiques de réception (264, 464).

11. Appareil selon la revendication 9 ou la revendication 10, chacun de la pluralité de ports de destination (120, 220) étant agencé pour :
éliminer les paquets reçus dont le PGID se trouve en dehors de la plage de la mémoire des statistiques de réception.

12. Appareil selon l'une quelconque des revendications 7 à 11, agencé en outre pour
identifier une pluralité de facteurs de suivi, chaque facteur de suivi ayant une pluralité de valeurs possibles,
générer une pluralité de PGID comprenant un PGID unique correspondant à chaque combinaison possible de valeurs pour la pluralité de facteurs de suivi, en
générant, pour chaque facteur de suivi, une carte permettant d'associer une pluralité respective de valeurs possibles à un code correspondant, la longueur du code correspondant à chaque facteur de suivi étant la plus petite longueur suffisante pour identifier de manière unique chacune de la pluralité respective de valeurs possibles ;
concaténant les codes correspondant à chaque combinaison possible de valeurs de la pluralité de facteurs de suivi pour former une pluralité d'identifiants de flux global ; et
comprimer de manière unique chacun de la pluralité d'identifiants de flux global en un PGID correspondant de la pluralité de PGID.

13. Programme informatique configuré, lorsqu'il est exécuté par au moins un processeur, pour amener le processeur à
recevoir des paquets en provenance d'un réseau (190), chaque paquet comprenant un identifiant de groupe de paquets, appelé sous forme abrégée PGID, le PGID compris dans chaque paquet identifiant une ou plusieurs d'une pluralité d'unités de ports de destination (120, 220) comme étant les destinations prévues du paquet ;
extraire le PGID de chaque paquet reçu, cumuler des statistiques de réception pour au moins une plage de valeurs de PGID, et stocker les statistiques de réception cumulées dans une mémoire des statistiques de réception (264, 464) d'au moins une unité de port de destination (120, 220) ; et
**caractérisé en ce que**
un ensemble commun de valeurs de PGID pour toutes les unités de ports de destination (120, 220) est utilisé ;
le programme informatique est configuré en outre pour amener le processeur à
cumuler des statistiques de réception, le cumul comprenant le compte des paquets mal dirigés par valeur de PGID ;
rapporter des statistiques de paquets mal dirigés en
récupérant, à partir de la mémoire des statistiques de réception (264, 464) de la au moins une unité de port de destination (120, 220), des statistiques de réception pour au moins une certains PGID pour lesquels l'unité de port de destination (120, 220) n'est pas une destination prévue, et
agréger les statistiques de réception récupérées pour générer les statistiques de paquets mal dirigés.

14. Programme informatique selon la revendication 13, configuré en outre, lorsqu'il est exécuté par le au moins un processeur, pour amener le processeur à effectuer l'un quelconque des procédés des revendications 2 à 6.
